# FASCICULE DE BREVET EUROPEEN

(11) **EP 1 359 309 B1**
(45) Date de publication et mention de la délivrance du brevet: **17.08.2005**
(21) Numéro de dépôt: 02291034.3
(22) Date de dépôt: 24.04.2002
(51) Int. Cl.: F02K 1/48, F02K 1/40, F02K 3/11

(54) **Turbine à gaz comportant un dispositif de mélange de gaz à lobes et à tubes**
Gasturbine mit einer Loben- und Röhren-Mischvorrichtung
Gas turbine with a gas mixing device comprising lobes and pipes

(43) Date de publication de la demande: 05.11.2003
(73) Titulaire: Lafkih, Abdelilah, 75018 Paris (FR)
(72) Inventeur: Lafkih, Abdelilah, 75018 Paris (FR)

(56) Documents cités:
- GB-A- 1 605 334
- US-A- 3 587 777

## Description

La présente invention concerne un nouveau procédé, destiné à être utilisé dans une turbine à gaz, notamment dans un turboréacteur équipant un avion de transport supersonique ou des avions militaires de chasse, et plus particulièrement, un nouveau procédé pour améliorer les performances des turbines à gaz et augmenter leur potentiel. Les moteurs à turbine à gaz comportent généralement un compresseur pour comprimer l'air s'écoulant à travers le moteur, une chambre de combustion dans laquelle on mélange le combustible avec l'air comprimé et on enflamme l'ensemble pour former un courant gazeux d'énergie élevée. Une partie de cette énergie de pression se transforme dans l'étage(s) turbine(s) en énergie mécanique pour entraîner le compresseur et les accessoires. Les gaz sortant de la turbine possèdent une pression supérieure à la pression atmosphérique. Un type classique de moteur à turbine à gaz pour un avion est le turboréacteur dans lequel la poussée est fournie par le canal d'éjection qui transforme cette énergie de pression en vitesse élevée. Un second type de moteur à turbine à gaz pour avion est le turbopropulseur, dans lequel l'énergie de détente des gaz chauds est utilisée pour entraîner une hélice. Le reliquat d'énergie étant transformé en énergie cinétique pour produire une poussée (dite « résiduelle ») dirigée vers l'arrière. L'effet de cette poussée est de produire un supplément de puissance proportionnel à la vitesse de déplacement de l'avion, venant s'ajouter à la puissance disponible sur l'hélice.

D'après la formule de la poussée d'un turboréacteur, pour accroître la poussée, il faut, soit augmenter le débit d'air qui traverse la machine, soit augmenter la vitesse d'éjection. Afin de réaliser un moteur entre turboréacteur normal et turbopropulseur, le réacteur à double flux se base sur le principe de capter à la manche d'entrée un débit d'air plus important. Le double flux se propose de rassembler deux effets : accélérer faiblement un grand débit d'air, et accélérer fortement un faible débit d'air.

Il se compose d'une partie chaude analogue à celle d'un réacteur simple flux et d'une partie froide (débit d'air ne passant pas par le générateur). Un autre type de moteur à turbine à gaz pour avion est la turbosoufflante dans laquelle une soufflante est montée à l'avant du compresseur et est entraînée par une deuxième turbine ou turbine de puissance montée en avale de la première turbine. La soufflante fournit un débit d'air comprimé qui est divisé en deux parties. La première partie pénètre une canalisation de dérivation extérieure pour contourner le générateur de gaz, et la deuxième partie pénètre dans le compresseur du générateur de gaz. Un avantage d'un moteur à turbosoufflante (soufflante classique ou contrarotative) par rapport au turboréacteur et sa capacité de déplacer une masse d'air plus importante et par là à augmenter la puissance de poussée du moteur.

En ce qui concerne l'augmentation de la vitesse d'éjection qui est proportionnelle à l'augmentation de la température dans le moteur, on utilise comme autre caractéristique pour accroître la puissance de poussée d'une turbine à gaz, un système de postcombustion. Dans un moteur à turbine à gaz avec système de postcombustion, on réalise une conduite d'éjection à l'aval de la (ou les) turbine(s). On injecte du combustible supplémentaire dans cette conduite d'éjection. Plus précisément, la chambre de combustion principale comprend une zone primaire où l'on apporte uniquement l'air nécessaire pour que la combustion du mélange air-carburant se fasse dans des conditions stoechiométriques. On atteint alors des températures voisines de 2000°C.

Les gaz chauds sont ensuite mélangés à de l'air plus frais dans une zone secondaire (zone de dilution) de façon à abaisser leur température à un niveau acceptable pour la turbine. Les gaz issus de la chambre de combustion contiennent donc une certaine quantité d'oxygène qui aurait pu brûler plus de carburant. C'est précisément cet excès d'oxygène qui va permettre de brûler le carburant dans la chambre de postcombustion pour augmenter l'énergie du courant gazeux et par conséquent la vitesse d'éjection et la poussée du moteur. Un type de moteur qui combine les caractéristiques d'une turbosoufflante et d'un moteur à postcombustion est un moteur à double flux dans lequel un flux d'air de soufflante est mélangé avec le courant gazeux provenant du générateur de gaz après la turbine mais avant le système de postcombustion.

Une caractéristique des turbosoufflantes et particulièrement des turbosoufflantes à taux de dilution élevé, est leur consommation spécifique de combustible relativement faible pour les vitesses subsoniques. Une caractéristique des turboréacteurs et des turbosoufflantes à taux de dilution relativement faible est leur caractéristique de poussée spécifique relativement élevée pour les vitesses supersoniques. De manière à satisfaire le besoin existant d'un avion qui puisse fonctionner efficacement sur une large gamme de vitesses subsoniques et supersoniques, on a développé des moteurs dénommés à cycle variable. Ces moteurs sont caractérisés par leur capacité de modifier le taux de dilution du moteur pendant leur fonctionnement.

Un problème fondamental posé en ce qui concerne un turboréacteur «sec» (sans postcombustion) est que malgré les progrès réalisés pour augmenter la température à l'entrée de la turbine, par le développement de nouveaux matériaux, et par l'amélioration des procédés de refroidissement, les matériaux de l'étage(s) turbine(s) limitaient l'apport de carburant dans la chambre de combustion. On utilise une grande quantité d'air de dilution et de refroidissement, ce qui diminue la température des gaz et par conséquent la poussée.

On voit clairement l'intérêt d'avoir une température des gaz dans la machine aussi élevée que possible : augmentation des rendements, amélioration de la consommation spécifique, accroissement de la poussée spécifique. L'intégration du dispositif de postcombustion pour augmenter la température des gaz dans un turboréacteur souffre d'un certain nombre d'inconvénients :

La durée de fonctionnement de postcombustion est courte (décollage, combat aérien), le reste du temps le turboréacteur fonctionne en «régime sec». La postcombustion devient inutile, et même génératrice de perte de charge par sa longueur, par une série de systèmes d'injection de carburant, de dispositifs accroche-flammes. Ces dispositifs sont complexes, encombrants et pesants, de plus ils sont soumis aux températures élevées et à des efforts aérodynamiques très importants des gaz chauds sortant du générateur de gaz, ce qui est défavorable à la longévité desdits dispositifs.

Cependant, les systèmes de postcombustion ont généralement des structures longues si on les compare à la taille des moteurs et qui doivent s'adapter à des températures de gaz de combustion relativement élevées, ces deux conditions nécessitent certaines structures supplémentaires qui ont pour résultats une augmentation du coût, et une quantité notable d'air de refroidissement, et par conséquent, il y a dégradation des performances du moteur.

En outre, la consommation horaire et spécifique d'une postcombustion est assez élevée, ce qui se traduisant bien évidement par une diminution d'autonomie.

D'autre part, l'énergie délivrée dans la chambre de postcombustion augmente la température et la vitesse des gaz d'éjection en aval de la turbine dans la partie arrière du moteur mais ne participe pas à augmenter la puissance de ladite turbine.

Enfin, la postcombustion permet d'obtenir des poussées élevées au détriment du potentiel des mobiles tournants.

GB-A-1605334 décrit un générateur de gaz qui se compose d'un corps basse pression comprenant une soufflante avant liée à un compresseur basse pression et un compresseur haute pression, une chambre de combustion interne conventionnelle, et

des turbines basse et haute pression entraînant le corps basse pression et le compresseur haute pression, tel que le générateur de gaz du moteur comporte, imbriquée avec la chambre de combustion interne conventionnelle, déjà citée, une deuxième chambre de combustion externe.

La présente invention entend donc remédier à ces divers inconvénients en définissant un nouveau procédé, destiné à réaliser un tel moteur, conforme à l'invention et

supposé offrir des performances supérieures, ainsi que fonctionner à des températures élevées pendants des durées prolongées sans nécessiter l'intégration du dispositif de postcombustion et des matériaux avancés pour les mobiles tournants.

On parvient à ces résultats en réalisant un turboréacteur comportant un dispositif qui combine une marguerite à lobes et des tuyaux d'orgue situé en aval des étages turbine haute et basse pression, ou bien une seule chambre de combustion comprenant deux étages séparés, interne et externe.

Selon un mode de réalisation de la présente invention, les deux chambres de combustion du générateur de gaz comportent quatre parois annulaires qui sont écartées radialement et se succèdent à partir d'un même axe de révolution, telles que les quatrième et troisième paroi constituent les enveloppes interne et externe de la chambre de combustion annulaire interne, les deuxième et première parois constituent les enveloppes internes et externes de la chambre de combustion annulaire externe, d'un même axe de révolution. Ladite chambre de combustion externe est disposée telle que l'extrémité aval de la paroi interne de ladite chambre de combustion externe entoure à la fois une partie de la paroi externe de la chambre de combustion interne et le carter turbine.

En effet, selon une caractéristique importante, le compresseur haute pression alimente en air comprimé la chambre de combustion interne et externe par deux flux gazeux.

Une entrée d'air est située entre ledit compresseur haute pression et ladite chambre de combustion externe, possédant une vanne qui comprend un opercule ou un écope mobile coulissant axialement.

Selon une particularité importante de l'invention, la température du flux gazeux qui traverse la chambre de combustion interne conventionnelle doit être limitée à une valeur selon le potentiel turbine désiré suivant l'application civile ou militaire, tandis que la température du flux gazeux qui traverse la chambre de combustion externe peut atteindre des valeurs importantes notablement supérieures à celle de la chambre de combustion interne suivant le potentiel désiré des matériaux que constituent les parties chaudes du moteur.

La marguerite du dispositif comprenant une pluralité de grands et de petits lobes s'étendant radialement, de façon que l'extrémité amont desdits lobes est fixée à l'extrémité avale de la paroi interne de la chambre de combustion externe, tandis que les extrémités externes situées à l'extrémité aval qui est éloignée de ladite extrémité amont sont fixées à une paroi située à l'entrée du canal d'éjection, et les extrémités internes de ladite extrémité aval sont disposées à proximité de l'extrémité aval de la paroi interne.

Une paroi externe contourne lesdites extrémités externes en aval des lobes en reliant la paroi à l'entrée du canal d'éjection à la paroi externe de la chambre de combustion externe. De cette façon, ladite paroi externe et les faces externes des parois des lobes constituent un premier passage communiquant avec ladite chambre de combustion externe, et les faces internes desdites parois des lobes et la paroi interne constituent un deuxième passage communiquant entre la chambre de combustion interne et le canal d'éjection. Des tuyaux d'orgue sont fixés sur les buses des lobes vers l'extrémité aval de manière à prolonger ledit premier passage vers l'aval. Le diamètre desdits tuyaux d'orgue diminue progressivement, radialement suivant les formes des grands et des petits lobes. Chaque tuyau d'orgue comporte une tuyère convergente- divergente communicant avec le canal d'éjection.

Cette structure permet de réaliser une répartition homogène et d'augmenter considérablement la surface de contact entre le flux gazeux sortant de la chambre de combustion externe et le flux gazeux sortant de la chambre de combustion interne à l'entrée du canal d'éjection.

L'invention sera mieux comprise, et des caractéristiques secondaires et leurs avantages apparaîtront au cours de la description de réalisation donnée ci-dessous à titre d'exemple. Il est entendu que la description et les dessins ne sont donnés qu'à titre indicatif et non limitatif.

Il sera fait référence aux dessins annexés, dans lesquels :-
La figure 1 est une coupe axiale d'un turboréacteur à double flux comportant le nouveau dispositif conforme à l'invention,
La figure 2 est un schéma d'une conception de l'art antérieur qui représente une section développée d'un étage de turbine,

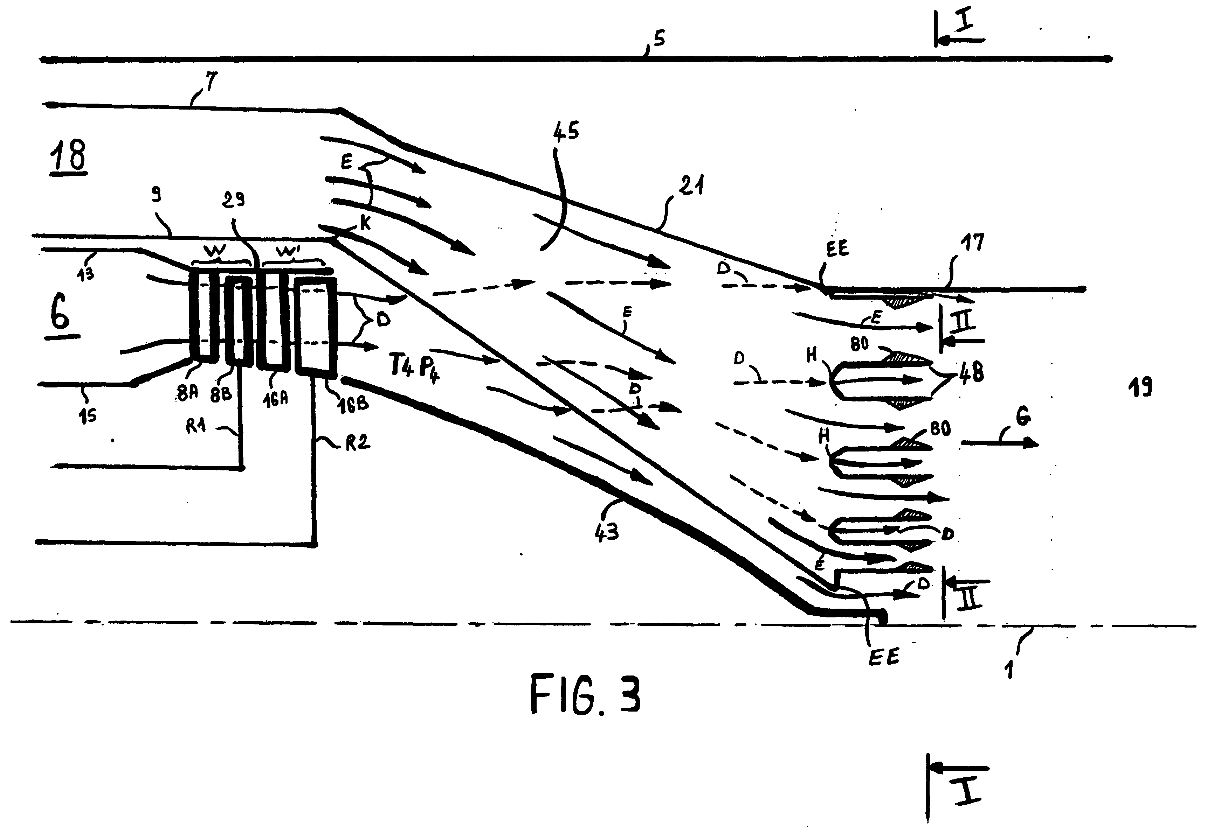

La figure 3 est une vue partielle développée du turboréacteur comprenant le nouveau dispositif selon un mode de réalisation de la présente invention,

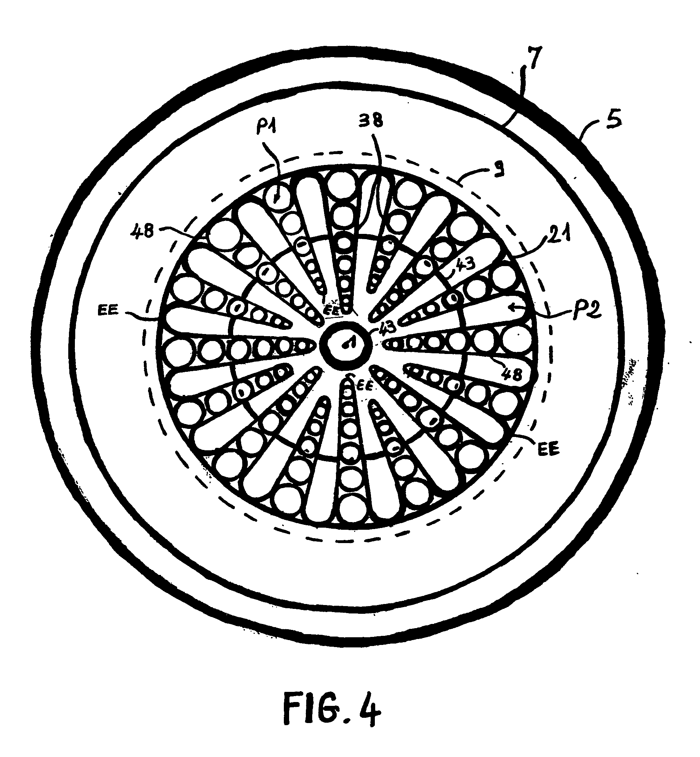

La figure 4 est une coupe transversale du turboréacteur comportant le nouveau dispositif suivant I-I de la figure 3, et

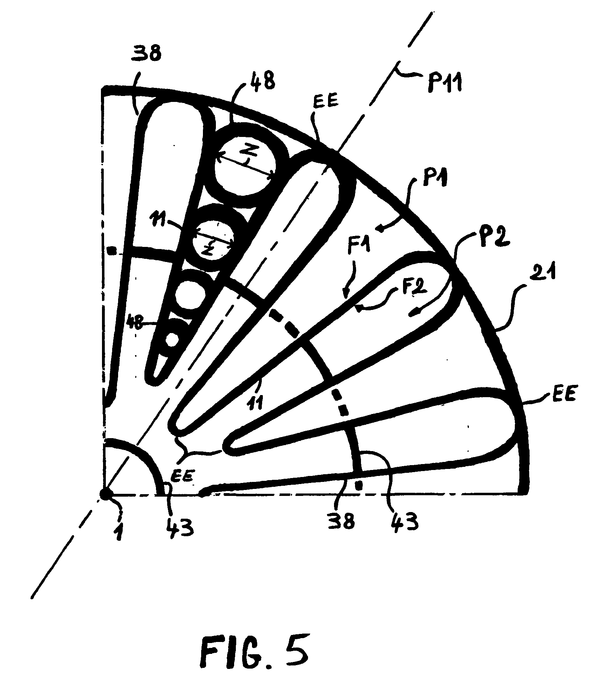

La figure 5 est une coupe transversale partielle développée du nouveau dispositif suivant II-II de la figure 3.

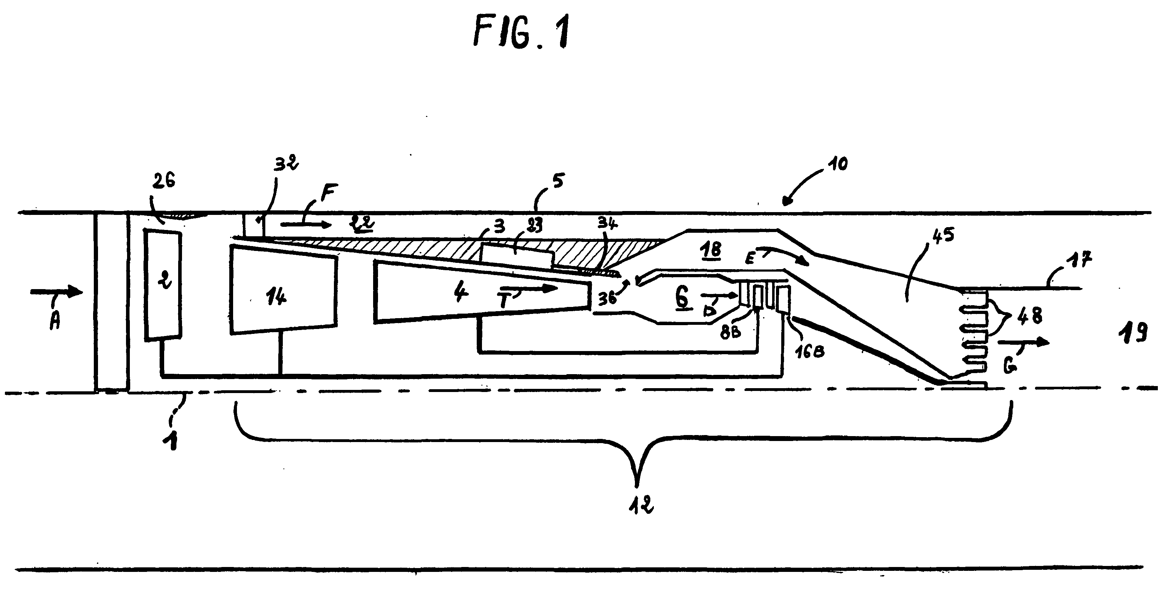

En référence à ces dessins, la figure1 représente un moteur à turbine à gaz à cycle variable double flux 10.

Le moteur 10 comprend un générateur de gaz 12 qui comporte un compresseur basse pression 14 et un compresseur haute pression 4 pour comprimer l'air s'écoulant au travers dans le sens de la flèche T, vers l'aval, une chambre de combustion annulaire interne conventionnelle 6 dans laquelle on mélange le combustible avec l'air pour former un courant gazeux d'énergie élevée et une turbine haute pression 8B qui extrait l'énergie du courant gazeux pour entraîner le compresseur haute pression 4. Le moteur 10 comprend en outre une soufflante 2 en amont du compresseur basse pression 14. Ladite soufflante 2 et ledit compresseur basse pression 14 sont entraînés par une deuxième turbine basse pression 16B, située à l'arrière de la première turbine haute pression 8B . L'air qui entre dans la chambre de combustion interne conventionnelle 6 engendre un flux gazeux D pour traverser les turbines haute et basse pression 8B et 16B. La soufflante 2 est située à l'intérieur d'une entrée d'une admission 26 et a pour effet de comprimer l'air A pénétrant dans l'admission 26. Une canalisation de dérivation extérieure 22 envoie un écoulement d'air F autour du générateur de gaz 12. Cette canalisation annulaire est située entre la paroi extérieure 5 du moteur 10 et la paroi intérieure 3 qui entoure le générateur de gaz 12.

Un moyen pour modifier le débit d'air de dérivation dans la canalisation de dérivation 22 est représenté en 32. Selon un mode de réalisation de la présente invention, le moyen de modification 32 comporte une directrice à calage variable, il s'agit d'aubes orientables dont le déplacement angulaire permet de dévier l'écoulement d'air F de la soufflante 2, ce qui a pour effet de modifier ledit débit d'air F à travers la canalisation de dérivation extérieure 22 et par conséquent d'augmenter ou de diminuer le taux de dilution.

Cependant, il apparaîtra clairement que l'invention n'est pas limitée à cette configuration et peut être réalisée par d'autres configurations, même par un moteur simple flux monocorps.

Le générateur de gaz 12 du moteur 10 comporte en outre - à côté de la chambre de combustion interne conventionnelle 6 - une deuxième chambre de combustion externe annulaire 18.

En effet, selon une caractéristique importante, il peut être observé que l'invention n'est pas limitée à cette configuration, et peut être réalisée par une seule chambre de combustion constituée par deux étages séparés, un premier étage 6 et un deuxième étage 18.

La chambre de combustion externe 18 communique avec le compresseur haute pression 4 par une entrée 36. Différents moyens existent pour modifier l'écoulement dans la chambre de combustion externe 18. Selon un mode de réalisation de la présente invention, le moyen de modification comporte une vanne 34 située à l'entrée 36.

Les caractéristiques de ce moyen consistent en ce que l'entrée 36 peut être totalement fermée créant un mode de fonctionnement d'un cycle pur de turboréacteur conventionnel dont seulement la chambre de combustion interne conventionnelle 6 est allumée, et que ladite entrée 36 peut être complètement ouverte créant un mode de fonctionnement d'un générateur de gaz 12, qui comporte deux chambres de combustion, interne 6 et externe 18. La vanne 34 est constituée d'un opercule qui peut prendre deux positions principales et laisser l'entrée 36 ouverte ou la fermer. En effet, la vanne 34 permet de modifier et plus précisément de régler l'écoulement d'air à travers les deux chambres de combustion, interne 6 et externe 18. Ainsi, la vanne 34 est également composée d'un dispositif tel qu'un vérin 23, relié à l'opercule 34, qui assure son déplacement axial.

En outre, la vanne 34 peut être constituée de tout autre dispositif de dérivation bien connu dans le domaine de l'art et être adaptée au moteur.

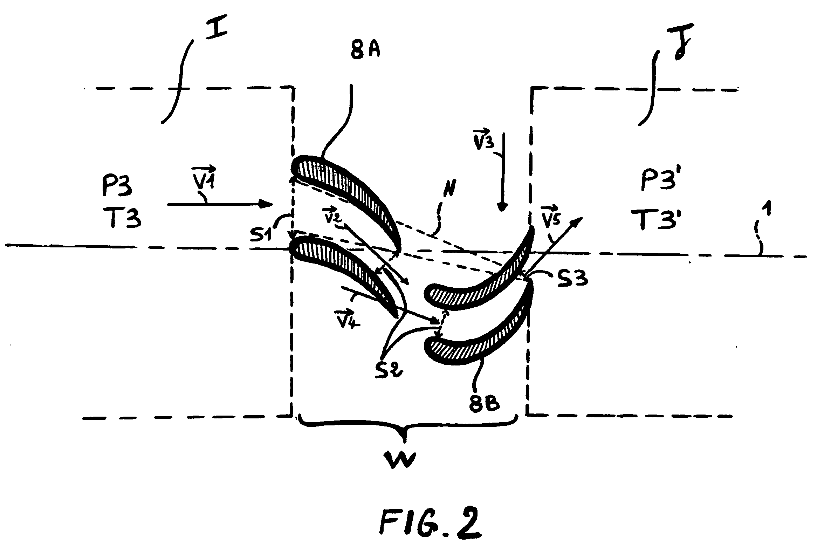

L'air qui entre dans la chambre de combustion externe 18 engendre un flux gazeux E qui traverse un dispositif qui combine une marguerite à lobes 45 et des tuyaux d'orgue 48 pour former avec le flux gazeux D, un mélange gazeux G à l'entrée du canal d'éjection 19. Sur la figure 2 et selon la conception de l'art antérieur, le premier étage de turbine W se compose d'une grille d'aubes stator 8A, suivie d'une grille d'aubes rotor 8B. Ledit étage W est du type « axial », d'où l'écoulement est parallèle à l'axe du moteur 1 puisque c'est en général, le type le plus rencontré sur les turboréacteurs.

Quel que soit le type de turbine, on sait que la détente dans la turbine est la phase du cycle pendant laquelle s'effectue la récupération. D'une partie de l'énergie fournie pendant la combustion et qui se transforme en énergie mécanique pour entraîner le compresseur et les accessoires du moteur.

Le rôle du stator ou distributeur 8A de turbine est de transformer une partie de l'énergie de pression délivrée par la chambre de combustion 6 en énergie cinétique.

Le rotor 8B transforme cette énergie cinétique en énergie mécanique sous la forme d'un couple moteur. La transformation d'énergie de pression en énergie cinétique s'effectue par détente. Plus précisément, et suivant une architecture conventionnelle, la section S1 à l'entrée du stator 8A est strictement supérieure à la section S2 à la sortie.

Ladite section S2 est une section commune entre la sortie du stator 8A et l'entrée du rotor 8B, et elle est strictement supérieure à la section S3 à la sortie du rotor 8B. Les filets du flux gazeux D sortent de la chambre de combustion interne 6 et attaquent les aubages stator 8A avec une vitesse V1 parallèle à l'axe longitudinal du moteur 1. Les canaux stator 8A étant convergents, les filets sortent du stator 8A avec une vitesse absolue V2 supérieure à la vitesse d'entrée V1 (V2 >V1). Cette prise de vitesse s'accompagne d'une première diminution de la pression statique. Le rotor 8B étant animé de la vitesse périphérique V3, les filets du flux gazeux D se présenteront à l'entrée du rotor 8B avec la vitesse relative V4 telle que V2=V3+V4. Les canaux du rotor 8B étant à section convergente, les filets sortiront du rotor 8B avec la vitesse relative V5, telle que V5 est supérieure à la vitesse relative V4 (V5 > V4). Là aussi dans le rotor 8B il y aura transformation d'énergie de pression en énergie cinétique, donc détente, d'où accélération des gaz dans le rotor provoque une force de réaction dont une composante est dirigée de façon à provoquer la rotation dudit rotor afin d'attaquer l'étage suivant W' dans les mêmes conditions.

Sachant que les canaux du stator 8A et du rotor 8B sont convergents, on a une première détente à la section S2 à la sortie du stator 8A et une deuxième détente à la section S3 à la sortie du rotor 8B.En considérant que l'étage turbine W se propose de raccorder un espace amont I où règnent les conditions génératrices pression P3 et température T3 à un espace aval J où règnent les conditions pression P3' et température T3', on peut imaginer que la section S1 à l'entrée du stator 8A et la section S3 à la sortie du rotor 8B forment un canal convergent N, qui accorde l'espace amont I à un espace aval j, puisque la section S2 est une section commune entre la sortie du stator 8A et l'entrée du rotor 8B. Supposons que la pression P3 dans l'espace amont I est égale à la pression P3' dans l'espace aval j, nous n'avons aucun débit dans le canal N. Augmentons la pression P3 dans l'espace amont I, un écoulement naît alors à travers le canal N, d'autant plus important que la différence entre la pression P3 et la pression P3' est grande. Le canal N étant convergent, l'écoulement sera accéléré par détente.

Sachant que l'espace amont I et l'espace aval J représentent la sortie de la chambre de combustion interne 6 et l'entrée du deuxième étage W', et sachant que la relation par laquelle la puissance turbine est donnée : Pt=(Ma+Mc) Cp(T3-T3'), d'où Ma et Mc, les débits masse d'air et de carburant ; Cp, la chaleur massique du mélange à pression constante, et T3 et T3' les températures en amont et an aval de l'étage turbine. Les gaz étant assimilés à un gaz parfait, nous connaissons la relation entre pressions statiques et températures statiques. La transformation d'énergie de pression en énergie cinétique s'effectue par détente, or cette énergie cinétique est fonction de la différence entre la pression P3 en amont et la pression P3' en aval de l'étage turbine W. Ainsi, le rapport entre la pression P3 et la pression P3' représente le taux de détente de l'étage.

Donc, si on augmente la différence entre la température T3 ou la pression P3, et la température T3' ou la pression P3', la puissance turbine croît soit :
- en augmentant la température T3 ou la pression P3 dans la section S1 de l'espace amont I;
- en diminuant la température T3' ou la pression P3' dans la section S3 de l'espace aval J.

De la même façon, dans le cas du deuxième étage W', ou de turbines multi-étages, et avec un raisonnement identique, la puissance des étages turbine augmente si la différence entre la température ou la pression en amont et la température ou la pression en aval desdits étages croît.

On sait que la limitation principale est la limitation de température de turbine, d'où les matériaux de l'étage(s) turbine limitaient l'apport de carburant dans la chambre de combustion. Donc la température en amont des étages turbine W, W' est limitée. Donc il faut diminuer la température T4 ou la pression P4 proprement dite en aval desdits étages turbine W, W' puisequ'il ne saurait être question d'augmenter la température T3 à la sortie de la chambre de combustion interne 6.

Sur ce principe se base cette invention. Dans un mode de réalisation recommandé de la présente invention, le nouveau dispositif représenté sur les dessins comprend :

Des première 7, deuxième 9, troisième 13, et quatrième 15 parois annulaires, de révolution d'axe 1, qui sont écartées radialement de l'axe 1 et se succèdent à partir de l'axe 1 dans l'ordre suivant de la quatrième 15, la troisième 13, puis la deuxième 9, et enfin la première 7.

Les première 7 et deuxième 9 parois constituent les enveloppes externe et interne de la chambre de combustion annulaire externe 18, de révolution d'axe 1. Les troisième 13 et quatrième 15 parois constituent les enveloppes externe et interne de la chambre de combustion annulaire interne 6, de révolution d'axe 1.

Des aubages 8A, 16A, fixes par rapport à une paroi 29 qui représente le carter turbine.

Des aubages mobiles 8B, 16B de deux rotors R1, R2 de turbine à gaz montés rotatifs autour de l'axe 1, traversés, suivant le sens générale d'écoulement parallèle à l'axe 1, par un flux gazeux D s'échappant de la chambre de combustion interne conventionnelle 6.

La chambre de combustion externe 18 est située dans un positionnement peu avancé en aval par rapport à la chambre de combustion interne 6 de façon que la paroi interne 9 de ladite chambre de combustion exteme18, entoure à la fois la paroi externe 13 de la chambre de combustion interne 6 et le carter turbine 29, afin que le flux gazeux E à la sortie de ladite chambre de combustion externe 18 soit évacué en aval des étages turbine W et W'.

Une marguerite 45 comporte des grands et des petits lobes 38 qui s'étendent radialement par rapport à l'axe 1 vers le canal d'éjection 19, en étant fixés de leurs extrémités K situées en amont à l'extrémité aval de la paroi interne 9 de la chambre de combustion externe 18, et de leurs extrémités externes EE situées en aval à l'extrémité amont de la paroi 17 à l'entrée du canal d'éjection 19, tandis que les extrémités internes EE desdits lobes 38 situées en aval sont disposées à proximité de l'extrémité aval de la paroi interne 43.

Les parois 11 des lobes 38 présentent un plan de symétrie P11 qui contient l'axe 1. Une paroi externe 21 prolonge vers l'aval la paroi externe 7 de la chambre de combustion externe 18, et entoure les extrémités externes EE situées en aval des lobes 38. Ladite paroi 21 est reliée à la paroi 17 à l'entrée du canal d'éjection 19. De cette façon, il sera observé que les deux faces externe F1 et interne F2 des parois 11 des lobes 38 de la marguerite 45 permettent l'obtention de deux passages suivants :
Un premier passage P1 ménagé entre les faces F1 et la paroi externe 21, canalisant le flux gazeux E ;
un deuxième passage P2 ménagé entre les faces F2 et la paroi interne 43, canalisant le flux gazeux D traversant les aubages 8A ; 8B; 16A ; et 16B.

Des tuyaux d'orgue 48 sont fixés vers les extrémités H sur les buses des lobes 38 situées en aval de la marguerite 45 pour former un dispositif qui combine ladite marguerite 45 et lesdits tuyaux d'orgue 48. De cette manière, lesdits tuyaux d'orgue 48 prolongent vers l'aval le passage P1 pour qu'il puisse communiquer avec le canal d'éjection 19.

Le diamètre Z des sections des tuyaux d'orgue 48 diminue progressivement, radialement par rapport à l'axe 1 suivant les formes des buses des grands et des petits lobes 38.

Le flux gazeux E annulaire sort de la chambre de combustion externe 18 et traverse - dans une première étape - le passage P1 situé entre les faces F1 des parois 11 des lobes 38 et la paroi externe 21, d'où il s'étend dans toute la section existante entre ladite paroi externe 21 et la paroi interne 43 suivant les formes des grands et des petits lobes 38. Vers les extrémités H des lobes 38 de la marguerite 45, le flux gazeux E traverse - dans une deuxième étape - les tuyaux d'orgue 48. Chaque tuyau d'orgue a une forme cylindrique, possédant une tuyère convergente-divergente 80, et donc le flux gazeux E se divise en plusieurs flux gazeux circulaires qui accélèrent à la sortie des tuyaux d'orgue 48.

Le flux gazeux D sorte de la chambre de combustion interne 6, entre dans le passage P2 situé en aval des étages turbine W, W' et constitué par les faces F2 des parois 11 des lobes 38 et la paroi interne 43, d'où ce flux gazeux D - de la même façon que celui du flux gazeux E- s'étend dans toute la section qui existe entre la paroi externe 21 et la paroi interne 43.

Les flux gazeux circulaires E sortent des tuyaux d'orgue 48-en passant par les tuyères convergentes-divergentes 80 - à grande vitesse et aspirent une grande quantité des gaz du flux gazeux D par effet de trompe, puisque les formes des grands et des petits lobes 38 de la marguerite 45 et les formes des sections circulaires des tuyaux d'orgue 48 ont permis d'augmenter considérablement la surface de contact entre le flux gazeux E et le flux gazeux D. Cependant, il est clair que l'invention n'est pas limitée à cette configuration, mais en couvre au contraire toutes les variantes qui pourraient augmenter la surface de contact entre le flux gazeux E et le flux gazeux D.

L'aspiration du flux gazeux D par le flux gazeux E par effet de trompe diminue la pression du premier flux gazeux D dans le passage P2, ce qui augmente la différence entre la pression en amont et la pression en aval des étages turbine W et W'. La puissance turbine croît, le nombre de tours de l'attelage augmente, et par conséquent, on a une augmentation du débit d'air A qui traverse le moteur 10.

On sait que la poussée est proportionnelle au débit d'air qui traverse le moteur, et elle est en même temps proportionnelle à la vitesse d'éjection des gaz, et que cette dernière varie comme la racine carrée de la température des gaz d'éjection. Ainsi, nous savons que les matériaux de l'étage turbine limitent l'apport de carburant dans les chambres de combustion conventionnelles.

En se basant sur la conception de la présente invention, la température dans la chambre de combustion interne 6 doit être limitée à une valeur selon le potentiel turbine désiré suivant l'application civile ou militaire.

N'ayant aucune partie mobile, l'apport de carburant dans la chambre de combustion externe 18 peut être important, et la valeur de la température dans ladite chambre de combustion peut être notablement supérieure à celle de la chambre de combustion interne 6, suivant le potentiel désiré des matériaux de la chambre de combustion externe 18.

A noter qu'à débit de carburant constant dans la chambre de combustion interne conventionnelle 6, l'augmentation de l'apport de carburant dans la chambre de combustion externe 18 entraîne un accroissement d'énergie de pression dans le dispositif qui combine la marguerite à lobes 45 et les tuyaux d'orgue 48. La vitesse d'écoulement du flux gazeux E à la sortie des tuyaux d'orgue 48 augmente jusqu'à une valeur supérieure à la valeur de la vitesse d'écoulement du flux gazeux D, ce qui engendre une aspiration par effet de trompe, la pression du flux gazeux D diminue en aval des étages turbine W, et W'. Lesdits étages turbine récupèrent une partie plus importante d'énergie, le couple mécanique croît, d'où la vitesse de rotation de l'attelage augmente, ce qui augmente le débit d'air A qui pénètre dans le moteur 10.

En sortant des premier et deuxième passages P1 et P2, les flux gazeux E et D forment un mélange gazeux G à l'entrée du canal d'éjection 19 qui règle la vitesse d'éjection des gaz. Dans le canal d'éjection 19, le flux gazeux E cède de l'énergie calorifique au flux gazeux D. La grande surface de contact que réalisent les formes des lobes 38 de la marguerite 45 et des tuyaux d'orgue 48 donne une répartition homogène et un excellent échange de chaleur entre les deux flux gazeux E et D. Les valeurs des températures des deux flux E et D tendent à s'égaliser et finissent par prendre une seule valeur commune qui représente la température d'équilibre. Cette valeur qui est notablement supérieure à la valeur de la température du flux gazeux D qui traverse les étages turbine W et W'. L'augmentation de la température dans le canal d'éjection 19 accélère la vitesse d'éjection du mélange gazeux G, et par conséquent, la poussée augmente.

Donc, l'énergie délivrée par la chambre de combustion externe 18 a participé d'une part à l'accroissement de la puissance turbine, et d'autre part, à l'augmentation de la température des gaz d'éjection jusqu'à une valeur assez importante en respectant la limitation principale qui est la limitation de température de turbine, d'où amélioration des performances du moteur, et augmentation du potentiel des parties mobiles de ce dernier. La température du flux gazeux E étant assez élevée en référence à la qualité des matériaux, selon une caractéristique importante, les grands et les petits lobes 38 de la marguerite 45 et les tuyaux d'orgue 48 qui s'étendent radialement dans la section existante entre la paroi externe 21 et la paroi interne 43 sont refroidis par le flux gazeux D dont la température est accessible par les parties mobiles, et est relativement faible en aval qu'en amont des étages turbine W, W'.

Les avantages principaux des dispositions précédemment décrites sont les suivants :
- réalisation d'un tel moteur à poussée augmentée, en éliminant le dispositif de postcombustion, ce qui rend le moteur moins volumineux, moins pesant, ce qui aurait une influence néfaste sur le coût dudit moteur ;
- augmentation de la température dans le moteur à une valeur assez élevée sans avoir recours à des matériaux avancés capables de supporter des températures élevées pour les parties tournantes ;
- augmentation du potentiel des mobiles tournants ;
- augmentation à la fois de la puissance turbine et de la vitesse d'éjection des gaz, d'où une amélioration du rendement et une consommation optimale en croisière supersonique.

## Revendications

1. Turbine à gaz ou turboréacteur comprenant un générateur de gaz (12), ledit générateur de gaz (12) comportant de façon connue un compresseur basse pression (14), un compresseur haute pression (4), une chambre de combustion conventionnelle (6), une turbine haute pression (8B) pour entraîner le compresseur haute pression (4), et une turbine basse pression (16B) pour entraîner le compresseur basse pression (14), un générateur de gaz (12) et, de plus avec la première chambre de combustion interne conventionnelle (6), une deuxième chambre de combustion externe (18), **caractérisée en ce qu'**il comporte un dispositif qui combine la marguerite à lobes (45) et les tuyaux d'orgue (48).

2. Turbine à gaz ou turboréacteur selon la revendication 1, **caractérisé en ce que** les chambres de combustion interne conventionnelle (6) et externe (18) du générateur de gaz (12) comportent des première (7), deuxième (9), troisième (13) et quatrième (15) parois annulaires, de révolution d'axe (1), lesdites parois étant écartées radialement et se succédant à partir de l'axe (1) telles que les quatrième (15) et troisième (13) parois constituent les enveloppes interne et externe de la chambre de combustion annulaire interne (6) de révolution d'axe (1), les deuxième (9) et première (7) parois constituent les enveloppes interne et externe de la chambre de combustion annulaire externe (18), de révolution d'axe (1), de façon que la paroi interne (9) de ladite chambre de combustion externe (18) entoure à la fois la paroi externe (13) de la chambre de combustion interne (6) et le carter turbine (29).

3. Turbine à gaz ou turboréacteur selon la revendication 2, **caractérisé en ce que** les deux chambres de combustion, interne (6) et externe (18) peuvent être deux étages séparés d'une seule chambre de combustion.

4. Turbine à gaz ou turboréacteur selon la revendication 1 et 2, **caractérisé en ce que** le compresseur haute pression (4) alimente en air comprimé la chambre de combustion interne (6) par un flux gazeux (D), et la chambre de combustion externe (18) par un flux gazeux (E) par l'intermédiaire d'une entrée d'air (36), l'écoulement dudit flux gazeux (E) par ladite entrée d'air (36) étant contrôlé par une vanne qui comprend un opercule (34) ou un écope mobile coulissant axialement.

5. Turbine à gaz ou turboréacteur selon l'une quelconque des revendications 1 à 4, **caractérisé en ce que** la température du flux gazeux (D) qui traverse la chambre de combustion interne conventionnelle (6) est limitée à une valeur selon le potentiel turbine désiré suivant l'application civile ou militaire, et que la température du flux gazeux (E) qui traverse la chambre de combustion externe (18) peut être importante et peut être notablement supérieure à celle de la chambre de combustion interne (6) suivant le potentiel désiré des matériaux.

6. Turbine à gaz ou turboréacteur selon l'une quelconque des revendications 1 à 4, **caractérisé en ce que** la marguerite à lobes (45) du dispositif comprenant une pluralité des grands et des petits lobes (38) s'étendant radialement par rapport à l'axe (1), et ayant une première extrémité amont (K) fixée à l'extrémité aval de la paroi interne (9) de la chambre de combustion (18), une deuxième extrémité aval (H) éloignée de ladite extrémité (K) telles que les extrémités externes (EE) sont fixées à la paroi (17) située à l'entrée du canal d'éjection (19) et les extrémités internes (EE) sont disposées à proximité de l'extrémité aval de la paroi interne (43), une paroi externe (21) contourne lesdites extrémités externes (EE) reliant la paroi (17) à la paroi externe (7) de la chambre de combustion externe (18) de manière que ladite paroi (21) et les faces externes (F1) des parois (11) des lobes (38) forment un premier passage (P1) communiquant avec ladite chambre externe (18) et les faces internes (F2) desdites parois (11) et la paroi interne (43) forment un deuxième passage (P2), des tuyaux d'orgue (48) sont fixés sur les buses des lobes (38) vers l'extrémité (H) de manière à prolonger ledit premier passage (P1), le diamètre (Z) des sections desdits tuyaux d'orgue (48) diminuant progressivement, radialement par rapport à l'axe (1) suivant les formes des buses des grands et des petits lobes (38), chaque tuyau d'orgue (48) comporte une tuyère convergente-divergente 80 communiquant avec le canal d'éjection (19).

7. Turbine à gaz ou turboréacteur selon l'une quelconque des revendications 1 à 6, **caractérisé en ce que** le générateur de gaz (12) comporte deux flux gazeux chauds séparés, le premier flux gazeux (D) traversant la chambre de combustion interne conventionnelle (6) ; les étages de turbine (W), (W') ; et le passage (P2), tandis que le second flux gazeux (E) traversant la chambre de combustion externe (18) ; le passage (P1) ; et les tuyaux d'orgue (48), de manière à aspirer par effet de trompe le premier flux gazeux (D) et d'abaisser la pression dudit flux gazeux (D) dans le passage (P2), les deux flux gazeux (D) et (E) se rejoignant à l'entrée du canal d'éjection (19) pour former un seul flux gazeux (G).

8. Turbine à gaz ou turboréacteur selon l'une quelconque des revendications 1 à 7, **caractérisé en ce que** les formes des grands et des petits lobes (38) de la marguerite (45) et des tuyaux d'orgue (48) réalisent une répartition homogène et augmentent considérablement la surface de contact entre le flux gazeux (E) et le flux gazeux (D) à l'entrée du canal d'éjection (19).

9. Turbine à gaz ou turboréacteur selon la revendication 8, **caractérisé en ce que** l'énergie calorifique du flux gazeux (E) délivrée par la chambre de combustion externe (18) du générateur de gaz (12) est apte à la fois à accroître la puissance des étages turbine (W), (W')et à augmenter la température du flux gazeux (G) dans le canal d'éjection (19).

## Patentansprüche

1. Gasturbine oder Turbomotor mit einem Gaserzeuger (12) der in bekannter Weise einen Niederdruckverdichter (14), einen Hochdruckverdichter (4), eine herkömmliche Brennkammer (6), eine Hochdruckturbine (8B) zum Antrieb des Hochdruckverdichters (4), eine Niederdruckturbine (16B) zum Antrieb des Niederdruckverdichters (14), einen Gaserzeuger (12) [sic] und außerdem zusätzlich zur ersten herkömmlichen, inneren Brennkammer (6) eine zweite, äußere Brennkammer (18) umfasst, **dadurch gekennzeichnet, dass** sie bzw. er eine Vorrichtung beinhaltet, die eine Daisy-Chain-Konfiguration [sic] mit "Orgelpfeifen" [sic] (48) umfassenden Lappen (45) beinhaltet.

2. Gasturbine oder Turbomotor nach Anspruch 1 **dadurch gekennzeichnet, dass** die herkömmliche innere Brennkammer (6) und äußere Brennkammer (18) des Gaserzeugers (12) eine erste (7), zweite (9), dritte (13) und vierte Ringwand (15) umfassen, wobei die Wände die Form von Umlaufstrukturen um die Achse (1) herum haben und radial voneinander getrennt sind und sich von der Achse (1) erstrecken, so dass die vierte Wand (15) und die dritte Wand (13) die inneren und äußeren Wände der inneren ringförmigen Brennkammer (6) bilden, wobei die Brennkammer die Form einer Umdrehung um die Achse (1) hat [form of a volume of revolution / sic] [und] die zweite Wand (9) und erste Wand (7) die inneren und äußeren Wände der äußeren ringförmigen Brennkammer (18) bilden, wobei die Brennkammer die Form einer Umdrehung um die Achse (1) hat [form of a volume of revolution? [sic] und wobei die innere Wand (9) der äußeren Brennkammer (18) die äußere Wand (13) der inneren Brennkammer (6) sowie das Gehäuse der Turbine (29) umgibt.

3. Gasturbine oder Turbomotor nach Anspruch 2 **dadurch gekennzeichnet, dass** die beiden Brennkammern, innen (6) und außen (18), aus zwei getrennten Stufen [sic] einer einzigen Brennkammer bestehen können.

4. Gasturbine oder Turbomotor nach den Ansprüchen 1 und 2 **dadurch gekennzeichnet, dass** der Hochdruckverdichter (4) Druckluft in die innere Brennkammer (6) über einen Gasstrom (D) speist und Druckluft in die äußere Brennkammer (18) über einen Gasstrom (E) über die Zwischenstufe eines Luftzugangs (36) speist, wobei der Strom des besagten Gasstroms (E) durch den Luftzugang (36) durch eine Schaufel gesteuert wird, die eine steuerbare Klappe (34) oder eine bewegliche, axial verschiebbare und gebogene Schaufel umfasst.

5. Gasturbine oder Turbomotor nach einem der Ansprüche 1 bis 4 **dadurch gekennzeichnet, dass** die Temperatur des durch die innere herkömmliche Brennkammer (6) strömenden Gasstroms (D) auf einen Wert begrenzt [ist], der durch das gewünschte Turbinenpotenzial auf der Grundlage der zivilen oder militärischen Anwendung bestimmt wird, und dass die Temperatur des durch die äußere Brennkammer (18) strömenden Gasstroms erheblich [und] wesentlich höher als die Temperatur in der inneren Brennkammer (6) auf der Grundlage des gewünschten Potenzials der [sic - Belastung auf?] die Materialien sein kann.

6. Gasturbine oder Turbomotor nach einem der Ansprüche 1 bis 4 **dadurch gekennzeichnet, dass** die Daisy-Chain-Konfiguration [sic] (45) mit Lappen (38) der Vorrichtung eine Vielzahl von großen und kleinen Lappen (38) hat, die sich in Bezug auf die Achse (1) radial erstrecken und ein erstes stromaufwärts liegendes Ende (K), das fest angebracht ist an das stromabwärts liegende Ende der inneren Wand (9) der Brennkammer (18), hat, [und] ein zweites stromabwärts liegendes Ende (H) das wesentlich entfernt vom [stromaufwärts] liegenden Ende (K) liegt, so dass die äußeren Enden (EE) an der Wand (17) befestigt sind die am Eingang zum Ausströmkanal (19) liegen und die inneren Enden (EI) in der Nähe des stromabwärts liegenden Endes der Innenwand (43) liegen, wobei eine äußere Wand (21) die äußeren Enden (EE) umgibt, und [Wand (21)] die äußere Wand (17) mit der äußeren Wand (7) der äußeren Brennkammer (18) verbindet, so dass die Wand (21) und die äußeren Flächen (F1) der Wände (11) der Lappen (38) einen ersten Durchgang (P1) bilden, der mit der äußeren Kammer (18) in Verbindung steht, und die inneren Flächen (F2) der Wände (11) und der inneren Wand (43) einen zweiten Durchgang (P2) bilden, [wobei] Orgelpfeifen (48) an der Venturi [sic] der Lappen (38) gegen das Ende (H) zu angebracht sind, so dass der erste Durchgang (P1) verlängert ist und die Durchmesser (Z) der Querschnitte der Orgelpfeifen (48) mit der radialen Progression in Bezug auf [sic] die Achse (1) fortschreitend abnehmen [sic] gemäß den Formen der Venturi der großen und kleinen Lappen (38), wobei jede Orgelpfeife (48) über eine eingezogene Rohrstrahldüse (80) [sic] verfügt, die mit dem Ausströmkanal(19) in Verbindung steht.

7. Gasturbine oder Turbomotor nach einem der Ansprüche 1 bis 6 **dadurch gekennzeichnet, dass** der Gaserzeuger (12) aus zwei separaten Heißgasströmen besteht, wobei der erste Gasstrom (D) durch die Kammer der inneren herkömmlichen Brennkammer (6), die Turbinenstufen (W, W') und den [zweiten] Durchgang (P2) strömt, und wobei der zweite Gasstrom (E) durch die Kammer der äußeren Brennkammer (18), den [ersten] Durchgang (P1) und die Orgelpfeifen (48) strömt, so dass durch einen Sauglüfter (Saugrohr oder Venturi) der erste Gasstrom (D) angesaugt wird und der Druck in besagtem Gasstrom (D) im [zweiten] Durchgang (P2) reduziert wird, wobei die beiden Gasströme (D und E) am Eingang des Ausströmkanals (19) wieder zusammengeführt werden und einen einzigen Gasstrom (G) bilden.

8. Gasturbine oder Turbomotor nach einem der Ansprüche 1 bis 7 **dadurch gekennzeichnet, dass** die Formen der großen und kleinen Lappen (38) der Daisy-Chain-Konfiguration [sic] (45) und der Orgelpfeifen [sic] (48) eine homogene Unterteilung bilden und die Kontaktfläche zwischen Gastrom (E) und Gasstrom (D) am Eingang des Ausströmkanals (19) wesentlich vergrößern.

9. Gasturbine oder Turbomotor nach Anspruch 8 **dadurch gekennzeichnet, dass** die Hitzeenergie des von der äußeren Brennkammer (18) des Gaserzeugers (12) zur Verfügung gestellten Gasstroms (E) gleichzeitig in der Lage ist, die Leistung der Turbinenstufen (W, W') und die Temperatur des Gasstromes (G) im Ausströmkanal (19) zu erhöhen.

## Claims

1. A gas turbine or turbojet engine, comprising a gas generator (12) which generator (12), in known fashion, is comprised of a low pressure compressor (14), a high pressure compressor (4), a conventional combustion chamber (6), a high pressure turbine (8B) for driving the said high pressure compressor (4), and a low pressure turbine (16B) for driving the said low pressure compressor (14), a gas generator (12) [sic], and, in addition to the first, conventional interior combustion chamber (6), a second, exterior combustion chamber (18); **characterized in that** it comprises a device which combines a marguerite (daisy configuration) [sic] having lobes (45), with "organ pipes" [sic] (48).

2. A gas turbine or turbojet engine according to claim 1; **characterized in that** the conventional interior combustion chamber (6) and exterior combustion chamber (18) of the gas generator (12) comprise a first (7), second (9), third (13), and fourth annular wall (15), which walls have the form of structures of revolution around the axis (1), and are mutually separated radially, proceeding from said axis (1), such that the fourth wall (15) and third wall (13) form the internal and external walls of the interior annular combustion chamber (6), which chamber has the form of a volume of revolution around the axis (1), [and] the second wall (9) and first wall (7) constitute the internal and external walls of the exterior annular combustion chamber (18), which chamber has the form of a volume of revolution around the axis (1), whereby the internal wall (9) of said exterior combustion chamber (18) surrounds the external wall (13) of the interior combustion chamber (6) and also surrounds the casing of the turbine (29).

3. A gas turbine or turbojet engine according to claim 2; **characterized in that** the two combustion chambers, interior (6) and exterior (18), may be two separate stages [sic] of a single combustion chamber.

4. A gas turbine or turbojet engine according to claims 1 and 2; **characterized in that** the high pressure compressor (4) feeds compressed air to the interior combustion chamber (6) via a gas flow (D), and feeds compressed air to the exterior combustion chamber (18) via a gas flow (E), by the intermediary of an air entryway (36), wherewith the flow of said gas flow (E) through said air entryway (36) is controlled by a vane which comprises a controllable flap (34) or a mobile axially slidable curved vane.

5. A gas turbine or turbojet engine according to one of claims 1 to 4; **characterized in that** the temperature of the gas flow (D) which passes through the interior conventional combustion chamber (6) [is] limited to a value according to the turbine potential desired based on the civilian or military application; and **in that** the temperature of the gas flow (E) which passes through the exterior combustion chamber (18) may be substantial, [and] may be appreciably greater than that of the interior combustion chamber (6), based on the desired potential of [sic -- stress on?] the materials.

6. A gas turbine or turbojet engine according to one of claims 1 to 4; **characterized in that** the marguerite (daisy configuration) [sic] (45) with lobes (38) of the device has a plurality of large and small lobes (38) which extend radially with respect to the axis (1), and has a first, upstream end (K) fixed to the downstream end of the internal wall (9) of the combustion chamber (18), [and] a second, downstream end (H) which is appreciably distant from said [upstream] end (K), such that the external ends (EE) are fixed to the wall (17) disposed at the entrance to the ejection channel (19), and the internal ends (EI) are disposed close to the downstream end of the internal wall (43), wherewith an external wall (21) surrounds the said external ends (EE), which [wall (21)] connects the external wall (17) to the external wall (7) of the external combustion chamber (18), such that said wall (21) and the external surfaces (F1) of the walls (11) of the lobes (38) form a first passage (P1) which communicates with said exterior chamber (18), and the internal surfaces (F2) of the walls (11) and the internal wall (43) form a second passage (P2), [wherewith] organ pipes (48) are fixed on the venturis of the lobes (38) toward the end (H), so as to prolong said first passage (P1), wherewith the diameters (Z) of the cross sections of said organ pipes (48) decrease [sic] progressively with radial progression with respect to [sic] the axis (1), according to the shapes of the venturis of the large and small lobes (38), wherewith each organ pipe (48) has a convergent-divergent conduit jet nozzle (80) [sic] which communicates with the ejection channel (19).

7. A gas turbine or turbojet engine according to one of claims 1 to 6; **characterized in that** the gas generator (12) is comprised of two separate hot gas flows, wherewith the first gas flow (D) passes through the chamber of the interior conventional combustion chamber (6), the turbine stages (W, W'), and the [second] passage (P2), whereas the second gas flow (E) passes through the chamber of the exterior combustion chamber (18), the [first] passage (P1), and the organ pipes (48), so as to aspirate by aspirator action (suction tube or venturi action) the first gas flow (D) and to reduce the pressure in said gas flow (D) in the [second] passage (P2), wherewith the two gas flows (D and E) re-join at the entrance to the ejection channel (19), to form a single gas flow (G).

8. A gas turbine or turbojet engine according to one of claims 1 to 7; **characterized in that** the shapes of the large and small lobes (38) of the marguerite (daisy configuration) [sic] (45) and the organ pipes [sic] (48) realize a homogeneous partition, and substantially increase the contact surface between the gas flow (E) and the gas flow (D) at the entrance of the ejection channel (19).

9. A gas turbine or turbojet engine according to claim 8; **characterized in that** the heat energy of the gas flow (E) delivered by the exterior combustion chamber (18) of the gas generator (12) is also capable at the same time of increasing the power of the turbine stages (W, W') and of increasing the temperature of the gas flow (G) in the ejection channel (19).
